# DEMANDE DE BREVET EUROPEEN

(11) **EP 1 437 675 A1**
(43) Date de publication de la demande: **14.07.2004**
(21) Numéro de dépôt: 02028482.4
(22) Date de dépôt: 19.12.2002
(51) Int. Cl.: G06K 7/08

(54) **Dispositif de detection ou d'identification de transpondeurs places dans un conteneur**

(71) Demandeur: EM Microelectronic-Marin SA, 2074 Marin (CH)
(72) Inventeur: Neveux, Laurent, 98000 Monaco (MC); Saak, Dertadian, 06200 Nice (FR); Desjeux, Olivier, 2525 Le Landeron (CH)
(74) Mandataire: Surmely, Gérard

(57) **Abrégé**

Le dispositif de détection ou d'identification de transpondeurs est associé à un conteneur ou tunnel (10) définissant une zone interne de détection (16) et présentant au moins une première ouverture ou passage d'introduction (12), ce conteneur ou tunnel étant destiné à recevoir temporairement une pluralité de transpondeurs. Ce dispositif comprend une antenne formée d'au moins une première bobine (24;34) comprenant une pluralité de spires (6;36) qui sont agencées avec un pas variable et/ou avec des surfaces de spire variables et/ou avec un enroulement des spires non plan de manière à engendrer un champ de communication sensiblement homogène à l'intérieur de ladite zone de détection et sensiblement constant selon l'axe central de ladite bobine.

## Description

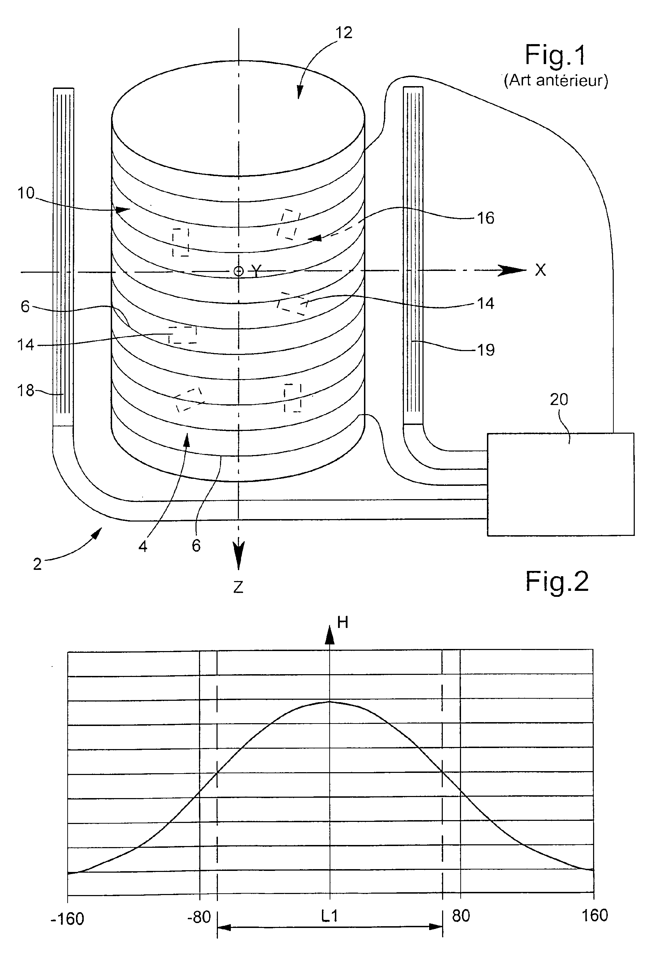

La présente invention concerne un dispositif de détection ou d'identification de transpondeurs situés dans une zone interne de détection d'un conteneur, d'un tunnel ou d'un espace prédéfini. En particulier, les transpondeurs sont associés à des objets, notamment des vêtements ou du linge qu'il est prévu de laver régulièrement dans une laverie industrielle. Pour déterminer correctement le flux entrant ou sortant de vêtements ou linge de la laverie, chaque vêtement ou linge est équipé d'un transpondeur. En général, le linge à laver est apporté en vrac dans des sacs ou autres moyens de transport. Afin d'identifier le nombre de pièces et éventuellement le type des pièces à laver, le sac contenant les pièces à laver est introduit par exemple dans un conteneur, tel que représenté à la figure 1 qui montre un dispositif de détection selon l'art antérieur pour une telle application.

Le dispositif de détection ou d'identification 2 est formé essentiellement d'une première bobine d'antenne 4 comprenant une pluralité de spires 6 agencées autour d'un conteneur 10 présentant une ouverture 12 d'introduction des objets munis de transpondeurs à détecter ou identifier. Quelques transpondeurs 14 ont été représentés de manière schématique dans la zone interne de détection 16 du conteneur 10. L'axe central Z de cette première bobine 6 correspond à la direction d'introduction des objets à identifier par l'ouverture 12.

Etant donné que les transpondeurs peuvent présenter une orientation quelconque et que leur distribution à l'intérieur du conteneur est généralement aléatoire, il est nécessaire, pour assurer une identification correcte et complète de l'ensemble des transpondeurs présents dans la zone interne 16, d'agencer des bobines de détection selon les deux axes principaux perpendiculaires à l'axe Z. Pour ce faire, l'homme du métier place par exemple deux bobines d'antenne 18 et 19 de part et d'autre du conteneur 10. Ces deux bobines ont toutes deux comme axe central l'axe X et participe donc conjointement à la détection des transpondeurs 14 selon cette direction X. Pour la détection selon l'axe Y perpendiculaire au plan de la figure 1, l'homme du métier agencera deux bobines d'antenne de manière similaire à celles décrites ci-avant pour la détection selon l'axe X. Ces dernières bobines d'antenne n'ont pas été représentées à la figure 1. Ainsi, le dispositif de détection de transpondeurs forme une antenne tridimensionnelle. L'agencement des bobines d'antenne pour la détection selon les axes X et Y permet d'introduire aisément les objets munis des transpondeurs à l'intérieur du conteneur. Les bobines d'antenne sont reliées à une unité électronique 20 agencée pour la mise en oeuvre d'un protocole de communication connu de l'homme du métier.

Le dispositif de détection représenté à la figure 1 présente un inconvénient majeur car le champ de communication engendré par le dispositif 2 à l'intérieur de la zone interne de détection 16 n'est ni homogène, ni constant selon chaque axe principal X, Y et Z. Pour ce qui concerne la détection selon l'axe d'introduction Z, on observe une amplitude du champ variant sensiblement selon une courbe de Gauss représentée à la figure 2. Dans l'exemple de cette figure 2, la bobine 4 a un enroulement de longueur L1 et formé de plusieurs spires équidistantes entre -70 cm et +70 cm selon l'axe Z. On observe ainsi une diminution de l'amplitude du champ magnétique H d'environ 40 % entre le maximum au centre du conteneur 10 et les deux régions d'extrémité de ce conteneur, respectivement de la bobine 4. Cette forte variation pose un problème de détection des transpondeurs répartis dans le conteneur. Dans un tel cas, il est donc nécessaire de dimensionner les bobines d'antenne de manière à ce que les valeurs d'amplitude moindre dans les régions d'extrémité soient encore suffisantes pour assurer une bonne détection.

Le problème relatif à la bobine 4 enroulée autour du conteneur 10 concerne également le champ de communication engendré par les bobines d'antenne 18 et 19 selon l'axe X. Pour des raisons de symétrie, le même problème concerne également la détection selon l'axe Y. Chacune des bobines 18 et 19 engendre un champ magnétique dont l'amplitude maximum est située sensiblement au milieu de chacune de ces bobines. Il en résulte que le maximum du champ magnétique est situé à l'extérieur du conteneur 10 et qu'une grande partie du champ engendré est inutile étant donné qu'il est situé à l'extérieur de ce conteneur. De plus, dans la région centrale du conteneur, le champ de détection présente une amplitude moindre, ce qui nécessite un surdimensionnement des bobines 18 et 19 pour assurer une amplitude minimum suffisante à la détection des transpondeurs.

Le but principal de la présente invention est de résoudre le problème lié à l'inconvénient majeur susmentionné en fournissant un dispositif d'identification de transpondeurs engendrant un champ de détection à l'intérieur du conteneur ou de l'espace prédéfini qui soit homogène et sensiblement constant dans la zone interne de détection selon chacun des axes principaux de détection.

Un autre but de l'invention est de fournir un dispositif de détection de transpondeurs qui présente une haute efficacité de détection relativement aux dimensions des bobines d'antenne, qui soit d'un encombrement minimal et qui n'entrave pas la ou les ouvertures d'introduction prévue(s) pour l'introduction des objets munis de transpondeurs dans le conteneur ou l'espace prédéfini de détection.

A cet effet, la présente invention concerne un dispositif de détection ou d'identification de transpondeurs qui est associé à un conteneur, un tunnel ou un espace prédéfini de détection présentant au moins une première ouverture ou un premier passage d'introduction donnant accès à une zone de détection et destiné à recevoir temporairement une pluralité de transpondeurs. Ce dispositif comprend une antenne formée d'au moins une première bobine comprenant une première pluralité de spires. Selon l'invention, cette pluralité de spires est agencée avec un pas variable et/ou des surfaces de spires variables et/ou avec un enroulement des spires non-plan, c'est-à-dire avec des courbures sortant d'un plan perpendiculaire à l'axe central de ladite première bobine, de manière à engendrer à l'intérieur de la zone de détection un champ de communication sensiblement homogène et présentant une amplitude sensiblement constante selon ledit axe central de la première bobine.

Différents modes de réalisation adaptés aux axes principaux de détection associés au conteneur ou à l'espace prédéfini seront décrits ci-après à l'aide de la description suivante qui est faite en référence au dessin annexé, donné à titre d'exemple nullement limitatif, dans lequel :
- la figure 1, déjà décrite, montre schématiquement un conteneur associé à un dispositif de détection tridimensionnel de transpondeurs;
- la figure 2, déjà décrite, montre schématiquement l'amplitude du champ magnétique à l'intérieur du conteneur de la figure 1 selon l'axe Z;
- la figure 3 montre schématiquement un premier mode de réalisation d'un dispositif selon l'invention;
- la figure 4 montre graphiquement l'amplitude du champ magnétique engendré par la bobine d'antenne de la figure 3 à l'intérieur du conteneur;
- la figure 5 montre schématiquement un deuxième mode de réalisation de l'invention;
- la figure 6 représente une variante de la figure 5, et
- la figure 7 montre une autre variante de réalisation d'un dispositif selon l'invention sur la base du deuxième mode de réalisation.

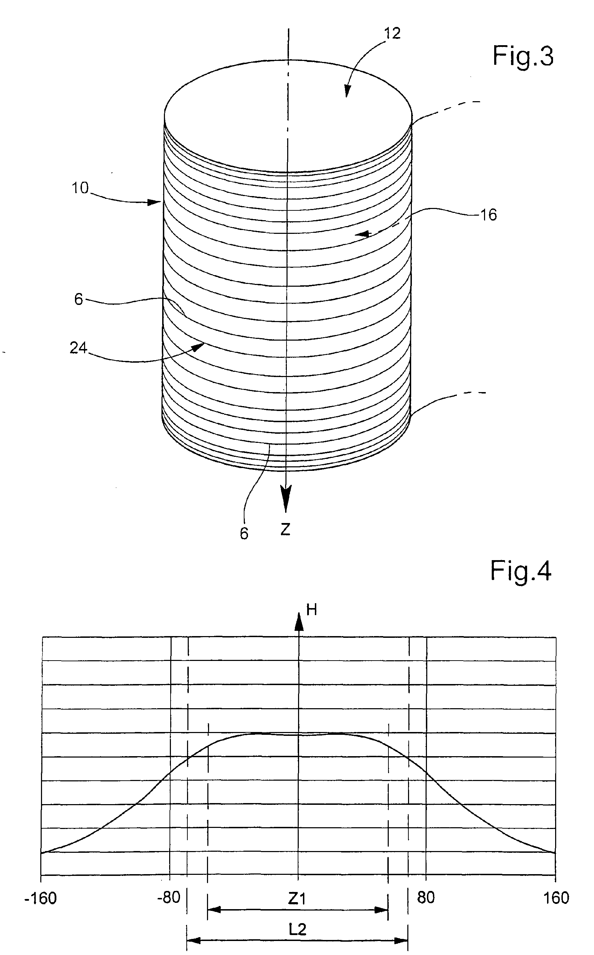

A l'aide des figures 3 et 4, on décrira ci-après un premier mode de réalisation de l'invention qui concerne principalement l'agencement de la bobine d'antenne selon l'axe principal Z d'introduction des objets munis de transpondeurs à l'intérieur du conteneur 10. De manière à obtenir un champ homogène et sensiblement constant à l'intérieur de la zone de détection 16 du conteneur selon l'axe central Z de la bobine 24, les spires 6 de cette bobine 24 sont distribuées avec un pas variable. Ce pas de spire variable diminue depuis la région centrale en direction des deux régions d'extrémité du conteneur, en particulier en direction de l'ouverture d'introduction 12. Le tableau suivant donne, à titre d'exemple pour un conteneur d'environ deux mètres de haut, l'écartement entre les vingt-huit spires formant la bobine d'antenne 24.

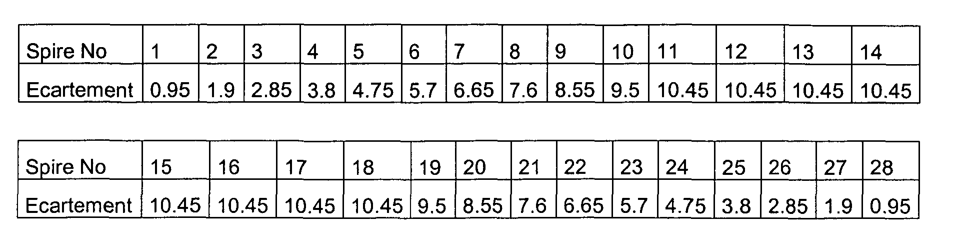

Dans cet exemple donné à titre nullement limitatif, on remarque que l'augmentation de l'écartement est sensiblement linéaire jusqu'à la spire 11 et qu'il croît en direction de la région centrale du conteneur 10. Ensuite, l'écartement est conservé constant dans la région centrale entre les spires 11 et 18. Finalement, l'écartement diminue de façon sensiblement linéaire entre la spire 19 et la spire 28, de manière symétrique à la variation de l'écartement intervenant entre la spire 1 et 11. La figure 4 montre graphiquement la valeur de l'amplitude du champ de communication H pour une bobine d'antenne agencée selon le premier mode de réalisation décrit ici, mais d'une longueur L2 égale environ à 140 cm. Dans cette dernière variante de réalisation, l'écartement entre spires varie de 1,3 cm à 10 cm entre les extrémités de la bobine d'antenne et sa région centrale. On observe ainsi que l'amplitude du champ H varie moins à l'intérieur de la bobine 24, c'est-à-dire à l'intérieur de la zone de détection du conteneur 10, que dans le cas de l'art antérieur représenté à la figure 2. La variation de l'amplitude du champ H à l'intérieur de la bobine est d'environ 15 %. Si on limite la zone interne de détection Z1 à l'intérieur de la bobine 24, par exemple d'une longueur égale à 10 % de la longueur de cette bobine, de chaque côté des deux extrémités, la variation d'amplitude à l'intérieur de cette zone Z1 ne dépasse pas 10 %. De telles variations d'amplitude répondent à la définition d'amplitude sensiblement constante dans le cadre de la présente invention.

On notera encore que des capacités sont agencées à l'intérieur de la bobine d'antenne en série avec les spires pour éviter de créer des surtensions qui peuvent être localement importantes.

Dans une variante perfectionnée du premier mode de réalisation décrit ici, il est prévu de compléter la première pluralité de spires distinctes, distribuées de la manière décrite précédemment, par une deuxième pluralité de spires placées à différents endroits déterminés, en particulier à l'endroit de certaines spires de la première pluralité de manière à multiplier le nombre de spires à ces endroits spécifiques. A titre d'exemple non limitatif, dix-huit spires sont ajoutées à une première pluralité de trente spires définissant une bobine d'antenne d'environ 1 m60. Sur la longueur de la demi-bobine, la spire 1 est complétée de trois autres spires, la spire 2 est complétée de deux autres spires et la spire 3 est complétée d'une autre spire. La spire 15 située dans la région centrale de la bobine est complétée par trois spires. Ceci s'applique également à l'autre demi-bobine. Cette distribution des spires formant la bobine permet de renforcer la valeur du champ magnétique généré aux extrémités et au centre de cette bobine. Un tel agencement permet de limiter la variation de l'amplitude du champ magnétique H à environ 10 % sur toute la longueur de la bobine d'antenne. Si on enlève environ 10 % de la longueur de la bobine à chaque extrémité pour définir la zone interne de détection, comme dans la première variante décrite ci-avant, la variation de l'amplitude du champ magnétique H à l'intérieur de cette zone interne est théoriquement d'environ 5 % avec une distribution optimale des écartements entre les spires. Pour optimiser la variation des écartements entre spires le long de l'axe central de la bobine d'antenne, l'homme du métier pourra utiliser des moyens électroniques de simulation.

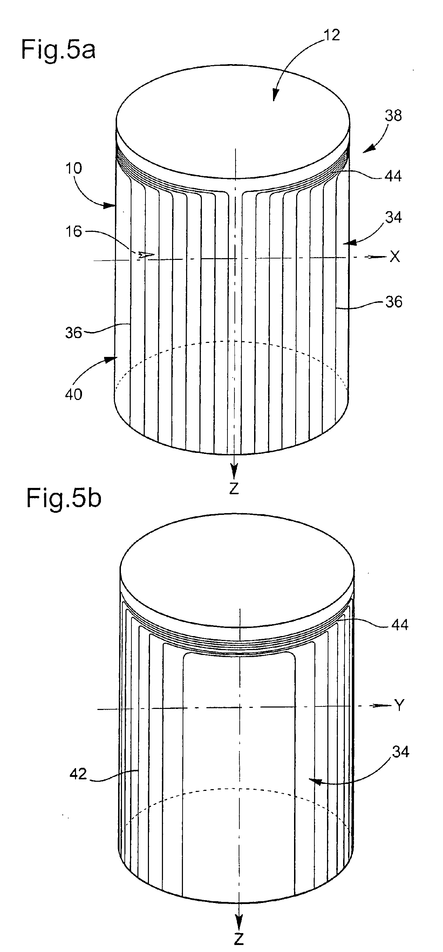

On décrira ci-après à l'aide de la figure 5 (5a et 5b) un deuxième mode de réalisation de l'invention pour l'agencement d'une bobine d'antenne particulièrement adaptée à une détection selon l'axe X ou Y perpendiculaire à l'axe Z qui définit la direction d'introduction dans le conteneur. Dans le cas représenté à la figure 5, le conteneur 10 a une forme cylindrique avec une ouverture d'introduction 12 qui s'étend sur toute la surface géométrique supérieure du cylindre. La bobine d'antenne 34 est formée d'une pluralité de spires 36 de section sensiblement rectangulaire avec un axe central perpendiculaire à l'axe d'introduction Z et définissant l'axe de référence X. On notera qu'un même agencement est prévu pour la bobine d'antenne ayant son axe central selon l'axe de référence Y.

Les spires 36 de la bobine 34 présentent un pas sensiblement constant, mais les surfaces ou sections respectives de la première pluralité de spires sont variables. Selon l'axe central X de la bobine d'antenne, la section des spires diminue depuis la région centrale de la bobine et donc du conteneur en direction de la paroi extérieure du conteneur 10, c'est à dire des deux extrémités de la bobine. Comme le courant circulant dans les spires est constant pour l'ensemble des spires, le champ magnétique H se trouve renforcé dans les régions d'extrémité de la bobine d'antenne selon l'axe central de celle-ci. Comme dans le premier mode de réalisation décrit précédemment, cet agencement particulier des spires de la bobine d'antenne 34 permet d'obtenir à l'intérieur de la zone interne de détection 16 un champ magnétique avec une amplitude sensiblement constante. Comme dans le premier mode de réalisation, il est possible dans une variante de prévoir une deuxième pluralité de spires venant compléter à certains endroits donnés la première pluralité de spires.

Ce deuxième mode de réalisation se caractérise aussi par le fait que les spires 36 sont réparties de manière à englober l'espace défini par le conteneur 10 à l'intérieur de la bobine. Ainsi, la zone interne de détection est située à l'intérieur de la bobine 34, contrairement à l'art antérieur correspondant à la figure 1.

L'agencement particulièrement efficace de la bobine d'antenne 34 en périphérie du conteneur 10, de manière peu encombrante et permettant d'obtenir une haute efficacité de détection, est rendue possible grâce à une caractéristique particulière de l'invention, à savoir le fait que les spires 36 sont regroupées dans la région périphérique 38 de l'ouverture d'introduction 12. L'enroulement des spires 36 est donc prévu non plan pour permettre d'une part de libérer la zone d'introduction supérieure 12 et d'autre part d'engendrer un champ magnétique homogène et sensiblement constant selon l'axe central X à l'intérieur de la zone de détection 16 du conteneur 10. Plus particulièrement, le conteneur présente une surface latérale cylindrique 40 parallèle à l'axe Z. Chaque spire est formée de deux parties latérales 42, d'une partie supérieure 44 dans la région supérieure 38 située du côté de l'ouverture 12 et une partie inférieure 46. Au moins la majorité des parties supérieures 44 des spires 36 sont agencées au niveau de la partie supérieure 38 de la surface latérale 42 du conteneur. Dans la variante représentée à la figure 5, les parties supérieures 44 des spires sont donc agencées en bordure de l'ouverture 12. Selon ce qui est prévu pour l'ouverture d'introduction 12, on remarquera que certaines spires peuvent, dans les régions d'extrémité, s'étendre sur la surface supérieure du conteneur 10. De préférence, la majorité des parties supérieures 44 des spires longent partiellement le bord de l'ouverture d'introduction 12.

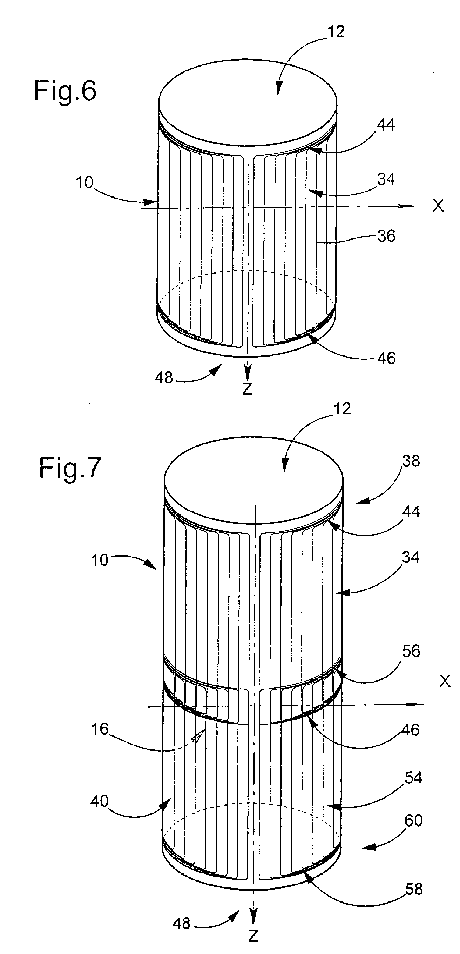

A la figure 6 est représentée une variante du deuxième mode de réalisation qui se distingue par le fait que les spires 36 de la bobine d'antenne 34 présentent également dans leur partie inférieure 46 une courbure de manière à dégager la surface géométrique inférieure du cylindre 10. Les parties inférieures 46 sont regroupées dans la région inférieure de la surface latérale 42 de manière similaire aux parties supérieures 44. Cette variante permet notamment d'utiliser le cylindre 10 comme tunnel de passage pour des objets munis de transpondeurs. Ces objets sont introduits par l'ouverture supérieure 12 et ressortent par l'ouverture inférieure 48.

Finalement, à la figure 7 est représentée une variante perfectionnée du deuxième mode de réalisation. Cette variante s'applique en particulier dans le cas où le conteneur ou tunnel 10 présente une dimension relativement grande selon l'axe Z d'introduction ou de passage. Le dispositif de détection comprend selon l'axe X deux bobines d'antenne 34 et 54. La bobine 34 située dans la partie supérieure est semblable à celle décrite à l'aide de la figure 6 ci-avant. La bobine d'antenne 54 dont l'axe central est parallèle à celui de la bobine d'antenne 34 présente un agencement similaire à celui de cette bobine 34. De manière à assurer une bonne détection dans la région médiane du tunnel ou tube 10, il est prévu que les bobines 34 et 54 présentent une zone de superposition dans cette région médiane. Les parties inférieures 46 des spires de la bobine 34 sont regroupées et présente une courbure selon la surface latérale 40 du conteneur ou tunnel 10. A titre d'exemple nullement limitatif, le tube 10 présente un diamètre de 120 cm et une hauteur de 150 cm. La zone de recouvrement correspond à environ 40 cm. L'ensemble des parties inférieures 58 des spires formant la bobine 54 sont regroupées de manière similaire aux parties inférieures de la bobine 34 de manière à laisser libre la surface inférieure 48.

L'ensemble des parties supérieures 56 des spires de la deuxième bobine 54 sont situées dans la région médiane et externe du conteneur 10. Ces parties supérieures sont agencées au moins en partie au-dessus des parties inférieures 46 des spires de la première bobine 34, de manière à engendrer un champ de communication d'une amplitude sensiblement égale à celle de ce champ de communication engendré entre cette région médiane et les deux régions d'extrémité 38 et 60 du tunnel 10.

Selon un autre mode de réalisation de l'invention, il est prévu d'agencer en périphérie du conteneur pour la détection selon le plan principal X-Y trois bobines décalées de 120°. Un tel agencement est avantageux car il permet de réduire la puissance nécessaire à la détection des transpondeurs dont les orientations sont aléatoires. Avec deux bobines orthogonales, l'orientation la plus défavorable correspond à une orientation de l'antenne plane du transpondeur à 45° des deux axes X et Y. Ainsi la projection de la surface d'antenne sur le plan perpendiculaire à l'axe X ou Y engendre une diminution proportionnelle à cos Π/4. Avec trois bobines d'antenne, l'orientation la plus défavorable de l'antenne plane du transpondeur correspond à 30° relativement aux axes centraux de deux bobines d'antenne. La diminution de surface effective de couplage est donc dans ce dernier cas proportionnelle à cos Π/6.

## Revendications

1. Dispositif de détection ou d'identification de transpondeurs associé à un conteneur ou à un tunnel de détection présentant au moins une première ouverture ou passage d'introduction (12) donnant accès à une zone de détection (16) et destiné à recevoir temporairement une pluralité de transpondeurs, ce dispositif comprenant une antenne formée d'au moins une première bobine (24; 34) comprenant une première pluralité de spires (6; 36), ce dispositif étant **caractérisé en ce que** cette première pluralité de spires est agencée avec un pas de spire variable et/ou des surfaces de spire variables et/ou avec un enroulement des spires non plan de manière à engendrer à l'intérieur de ladite zone de détection dudit conteneur ou tunnel un champ de communication sensiblement constant selon l'axe central de ladite première bobine.

2. Dispositif selon la revendication 1, **caractérisé en ce que** ladite première bobine (24) présente un pas de spire variable le long dudit axe central (Z) qui diminue depuis la région centrale ou médiane dudit conteneur ou tunnel en direction de la surface externe de ce conteneur ou tunnel et/ou de ladite première ouverture d'introduction où sont situées les deux régions d'extrémité de ladite première bobine.

3. Dispositif selon la revendication 2, **caractérisé en ce que** ledit axe central (Z) de ladite première bobine (24) est parallèle à une direction d'introduction de ladite pluralité de transpondeurs par ladite première ouverture (12).

4. Dispositif selon la revendication 1, **caractérisé en ce que** ladite première bobine (34) présente des surfaces ou sections de spire variables qui diminuent le long dudit axe central (X,Y) depuis la région centrale ou médiane dudit conteneur ou tunnel (10) en direction de la surface externe de ce conteneur ou tunnel et/ou de ladite première ouverture d'introduction.

5. Dispositif selon la revendication 4, **caractérisé en ce que** ledit axe central de ladite première bobine (34) est perpendiculaire à une direction d'introduction par ladite première ouverture (12).

6. Dispositif selon l'une des revendications précédentes, **caractérisé en ce que** ladite première pluralité de spires est complétée par une deuxième pluralité de spires agencées au niveau de certaines spires de ladite première pluralité.

7. Dispositif selon l'une des revendications précédentes, ledit axe central de ladite première bobine étant perpendiculaire à une direction d'introduction par ladite première ouverture, **caractérisé en ce que**, dans la région périphérique (38) de cette première ouverture, les spires sont au moins partiellement regroupées en bordure de cette première ouverture.

8. Dispositif selon la revendication 7, **caractérisé en ce que** ledit conteneur ou tunnel présente une surface latérale (40) sensiblement parallèle à ladite direction d'introduction, lesdites spires ayant deux parties latérales sensiblement parallèles à cette direction d'introduction, une partie supérieure du côté de ladite première ouverture et une partie inférieure, **caractérisé en ce qu'**au moins la majorité des parties supérieures (44) des spires sont agencées sur la partie supérieure (38) de ladite surface latérale dudit conteneur ou tunnel.

9. Dispositif selon la revendication 8, **caractérisé en ce qu'**au moins ladite majorité desdites parties inférieures (46) desdites spires (36) sont agencées sur la partie inférieure de ladite surface latérale (40).

10. Dispositif selon la revendication 8, **caractérisé en ce que** l'ensemble des parties inférieures (46) desdites spires de ladite première bobine sont regroupées dans une région périphérique médiane dudit conteneur ou tunnel, et **en ce que** ladite antenne comprend une deuxième bobine (54) dont l'axe central est sensiblement parallèle à celui de ladite première bobine, cette deuxième bobine ayant des spires comprenant également des parties latérales, une partie supérieure et une partie inférieure, l'ensemble des parties supérieures (56) des spires de cette deuxième bobine étant situé dans ladite région périphérique médiane, au moins en partie au-dessus des parties inférieures (46) des spires de ladite première bobine, de manière à engendrer un champ de communication d'une amplitude sensiblement égale à l'amplitude du champ de communication engendré entre cette région médiane et les deux régions d'extrémités (38 et 60).
